# EUROPEAN PATENT APPLICATION

(11) **EP 4 410 581 A1**
(43) Date of publication of application: **07.08.2024**
(21) Application number: 23154316.6
(22) Date of filing: 31.01.2023
(51) Int. Cl.: B60K 15/03, B60K 15/063

(54) **A LIQUID TANK ARRANGEMENT FOR A VEHICLE AND A VEHICLE COMPRISING THE LIQUID TANK ARRANGEMENT**

(71) Applicant: Volvo Construction Equipment AB, 631 85 Eskilstuna (SE)
(72) Inventor: Thiagarajan, Pitchai, 560097 Thindlu, Yelahanka Hobli (IN); Shimoga, Harisha, 560056 Bangalore (IN)
(74) Representative: Valea AB

(57) **Abstract**

The disclosure relates to liquid tank arrangement (1) for a vehicle (2). The liquid tank arrangement (1) comprises at least a first tank volume (12) and a second tank volume (14) fluidly connectable to each other. The at least first and second tank volumes (12, 14) form a single combined tank volume (16) when fluidly connected to each other. The at least first and second tank volumes (12, 14) form fluidly separate first and second tank volumes (12, 14) when fluidly disconnected from each other. The disclosure also relates to vehicle (2) comprising the liquid tank arrangement (1).

## Description

### TECHNICAL FIELD

The disclosure relates generally to liquid tanks for vehicles. In particular aspects, the disclosure relates to a liquid tank arrangement for a vehicle and a vehicle comprising the liquid tank arrangement. The disclosure can be applied in heavy-duty vehicles, such as trucks, buses, and construction equipment. Although the disclosure may be described with respect to a particular vehicle, the disclosure is not restricted to any particular vehicle.

### BACKGROUND

In automotive industry, production of vehicles involves manufacturing and assembly of a wide range of components, parts and systems. Some of these are intended for a specific purpose in a particular vehicle model. However, other vehicle models comprise similar components for similar purpose. Significant gains may be made if components may be standardized to function in more than one vehicle model without modification, or with only minimal modification. Therefore, there is a strive to develop improved technology relating to liquid tanks in which at least the above issues are considered.

### SUMMARY

According to a first aspect of the disclosure, there is provided a liquid tank arrangement for a vehicle according to claim 1. The liquid tank arrangement comprises at least a first tank volume and a second tank volume fluidly connectable to each other. The at least first and second tank volumes form a single combined tank volume when fluidly connected to each other. The at least first and second tank volumes form fluidly separate first and second tank volumes when fluidly disconnected from each other. The liquid tank arrangement comprising at least a first and second tank volume may thereby be manufactured and used for different kinds of vehicles. Depending on an intended use of the liquid tank arrangement, the tank volumes may either be installed as fluidly connected, such as if only one single liquid is to be contained in the tank, or fluidly disconnected, such as if each tank volume is intended for a particular liquid and purpose. If fluidly connected, the at least two connected tanks offer a larger volume for the single liquid.

In some examples, the at least first and second tank volumes are fluidly connectable to each other via a liquid connection, where the liquid connection is configured to be permanently open when the at least first and second tank volumes form a single combined tank volume and wherein the liquid connection is permanently sealed when the at least first and second tank volumes form fluidly separate first and second tank volumes. The liquid connection between the at least two tank volumes is configured as open or as sealed when the liquid tank arrangement is installed in a vehicle.

In some examples, each of the at least first and second tank volumes comprises a liquid inlet for filling liquid in the first volume and in the second volume, respectively, and a liquid outlet for dispensing liquid from the first volume and from the second volume, respectively. Only one of the liquid inlets and only one of the liquid outlets are in use. Other liquid inlets and liquid outlets are permanently sealed when the at least first and second tank volumes are fluidly connected to form the single combined tank volume. As such, when the liquid connection is configured as open to accommodate a single liquid in the at least first and second tank volumes, a liquid inlet of the first tank volume may be configured as open and a liquid inlet of the second tank volume is consequently configured as permanently sealed. Likewise, a liquid outlet of one of the first and second tank volumes is configured as open and the liquid outlet of the other first and second tank volumes is configured as sealed. Thereby, only one liquid inlet and one liquid outlet of the liquid tank arrangement is in use when the liquid tank arrangement is used for a single liquid. The sealed liquid inlet and outlet may be permanently sealed by glue or by welding. The sealed liquid inlet and outlet may not be visible or accessible to a user of a vehicle in which the liquid tank arrangement is installed.

In some examples, the at least first and second tank volumes are shaped to accommodate each other in a space-saving configuration. In this manner, the at least first and second tank volumes are shaped to fit in a predetermined space of a predetermined range of vehicles. Space is saved in that the at least first and second tank volumes are shaped to accommodate each other since all available space between the first and second tank volumes is used for the liquid tank arrangement.

In some examples, one of the at least first and second tank volumes, in use, is arranged vertically above the other of the at least first and second tank volumes. In certain compact vehicles, such as construction vehicles for road work, it is preferable to assemble/install components vertically rather than horizontally in order to limit a width and a length of the vehicle. Especially, prior art tank volumes that contain different liquids may by the present disclosure be assembled together in a space-saving configuration.

In some examples, at least two sides of each of the at least first and second tank volumes are adjacent two sides of at least one other of the at least first and second tank volumes. The first and second tank volumes are thereby shaped so as to abut each other. The adjacent sides may further provide mutual mechanical support and reinforcement to the first and second tank volumes.

In some examples, the at least first and second tank volumes are arranged in abutment with each other. The first and second tank volumes abut each other to minimize, or reduce, empty space between the tank volumes.

In some examples, the at least first and second tank volumes are together shaped as a seat for a user of a vehicle in which the tank arrangement is configured to be installed. Thereby, space is saved further in that a space usually occupied by a conventional seat in the vehicle may be used by the tank arrangement to store a liquid, or multiple liquids.

According to a second aspect of the disclosure, there is provided a vehicle according to claim 9 comprising the liquid tank arrangement according to any one of the embodiments of the first aspect of the disclosure. The liquid tank arrangement is designed to fit a certain range of vehicle models. The whole range of vehicle models may use the same liquid tank arrangement.

In some examples, the at least first and second tank volumes are fluidly connected to each other or fluidly disconnected from each other. Some of the aforementioned vehicle models require at least two separate tank volumes, fluidly disconnected, accommodating at least two different liquids for different purposes, whereas other vehicle models require a single liquid and a single fluidly connected tank volume, i.e. where the at least first and second tank volumes are fluidly connected to each other.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is an exemplary vehicle according to a second aspect of the disclosure.
**FIG. 2** is schematic view of an exemplary liquid tank arrangement according to a first aspect of the disclosure.
**FIG. 3** is an exemplary configuration of the liquid tank arrangement of FIG. 2.
**FIG. 4** is another exemplary configuration of the liquid tank arrangement of FIG. 2.
**FIG. 5** is an exploded perspective view of an exemplary liquid tank arrangement according to the first aspect of the disclosure.
**FIG. 6** is a perspective view of an exemplary assembled liquid tank arrangement according to the first aspect of the disclosure.

The drawings show diagrammatic exemplifying embodiments of the present disclosure and are thus not necessarily drawn to scale. Like reference characters refer to like elements throughout the description, unless expressed otherwise.

### DETAILED DESCRIPTION

Aspects set forth below represent the necessary information to enable those skilled in the art to practice the disclosure.

In the following, an improved liquid tank arrangement is disclosed which alleviates at least one drawback of the prior art, or which at least provides a suitable alternative. The liquid tank arrangement comprising at least a first and second tank volume may be manufactured and used for different kinds of vehicles. Depending on an intended use of the liquid tank arrangement, the tank volumes may either be installed as fluidly connected, such as if only one single liquid is to be contained in the tank, or fluidly disconnected, such as if each tank volume is intended for a particular liquid and purpose. If fluidly connected, the at least two connected tanks offer a larger volume for the single liquid. Liquid volume is important for end-users, especially in small compact vehicles, where space is limited.

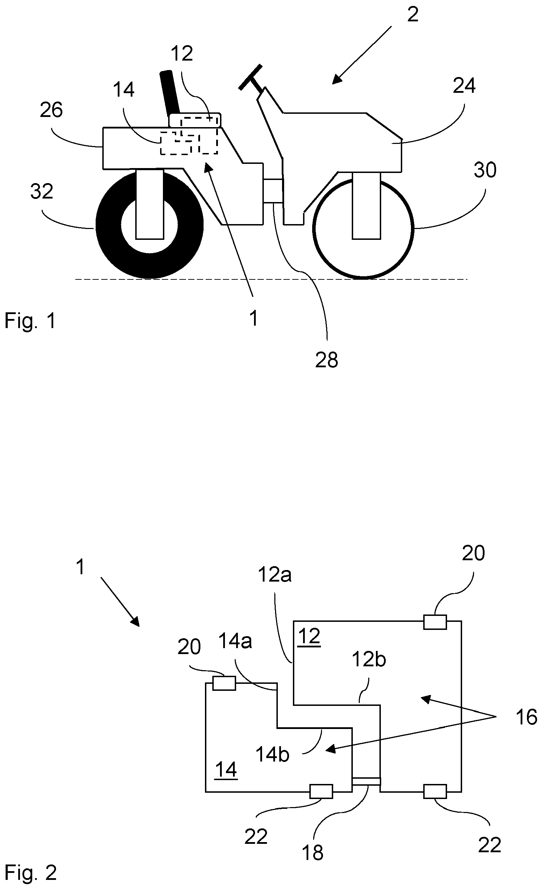

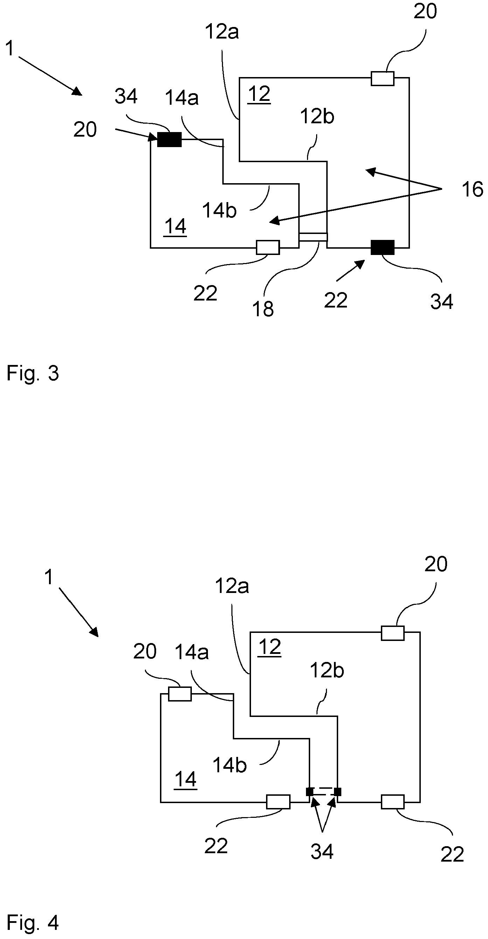

**FIG. 1** is an exemplary vehicle 2 according to a second aspect of the disclosure. The vehicle 2 comprises a liquid tank arrangement 1 according to a first aspect of the disclosure. The liquid tank arrangement 1 comprises at least a first tank volume 12 and a second tank volume 14 fluidly connectable to each other. The at least first and second tank volumes 12, 14 form a single combined tank volume 16 when fluidly connected to each other, to be described more in detail in conjunction with **FIG. 3** below. The at least first and second tank volumes 12, 14 form fluidly separate first and second tank volumes 12, 14 when fluidly disconnected from each other, which is described more in detail in conjunction with **FIG. 4** below.

In the vehicle 2, the at least first and second tank volumes 12, 14 may be fluidly connected to each other or fluidly disconnected from each other. The liquid tank arrangement 1 is designed to fit a certain range of vehicle models. The whole range of vehicle models may use the same liquid tank arrangement 1. Some of the vehicle models require at least two separate tank volumes, fluidly disconnected, accommodating at least two different liquids for different purposes, whereas other vehicle models require a single liquid and a single fluidly connected tank volume, i.e. where the at least first and second tank volumes 12, 14 are fluidly connected to each other, such as the combined tank volume 16.

One example of a vehicle 2 requiring a first and second tank volumes 12, 14, each holding a different liquid is shown in **FIG. 1** as a combination roller. The combination roller has a front carriage 24 and rear carriage 26 which are connected by an articulated joint 28. The front carriage 24 comprises a steel drum 30, used for compaction. The rear carriage 26 comprises wheels having rubber tires 32, used for propulsion. During road work, e.g., compaction of asphalt, water is sprayed on the steel drum 30 to avoid asphalt sticking to the drum. The rubber tires 32, however, need to be sprayed with an emulsion to prevent asphalt from sticking to the tires 32. Therefore, at least a first and a second tank volumes 12, 14 are needed. A second example of a vehicle 2 is a double drum roller (not shown), which comprises an additional steel drum 30 instead of rubber tires. The double drum roller only requires water for spraying on the steel drums 30. By the present disclosure, the same liquid tank arrangement may be manufactured for both vehicle models. During installation and assembly, the at least first and second tank volumes 12, 14 are either configured as fluidly separate first and second tank volumes 12, 14, such as for the combination roller or as a single combined tank volume 16 when fluidly connected to each other, such as for the double drum roller.

Conventionally, for a combination roller, a water tank is installed in the front carriage 24 for spraying on the steel drum 30 of the front carriage. An emulsion tank is installed in the rear carriage for spraying emulsion on the rubber tires 32. By the present disclosure, the liquid tank arrangement 1 may be assembled in the rear carriage for both types of vehicles 2 of the example above. One of the at least first and second tank volumes 12, 14, may in use, be arranged vertically above the other of the at least first and second tank volumes 12, 14. The first and second tank volumes 12, 14 may be installed in the same carriage of the example vehicle models. The first and second tank volumes 12, 14 may further be shaped to accommodate each other in a space-saving configuration. Thereby space may be saved and the same liquid tank arrangement 1 may be used for both vehicle models.

As shown in **FIG. 2****,** at least two sides 12a, 12b, 14a, 14b of each of the at least first and second tank volumes 12, 14 are adjacent two sides 12a, 12b, 14a, 14b of at least one other of the at least first and second tank volumes. The first and second tank volumes are thereby shaped so as to abut each other and save space. The adjacent sides may provide mutual mechanical support and reinforcement to the first and second tank volumes 12, 14. In the illustrated example, first sides 12a, 14a are considered adjacent each other and second sides 12b, 14b are considered adjacent each other.

The at least first and second tank volumes 12, 14 may be arranged in abutment with each other. The first and second tank volumes 12 ,14 abut each other to minimize, or reduce, empty space between the first and second tank volumes 12, 14. In **FIGS 2-4****,** space between the first and second tank volumes 12, 14 is exaggerated for illustrative purposes. In practice, the space may be minimized by abutting the first and second tank volumes 12, 14 against each other.

**FIG. 2** exemplifies the liquid tank arrangement 1 and how the at least first and second tank volumes 12, 14 may be fluidly connectable to each other via a liquid connection 18. The liquid connection 18 may be configured to be permanently open when the at least first and second tank volumes 12, 14 form the single combined tank volume 16. The liquid connection 18 may be permanently sealed when the at least first and second tank volumes 12, 14 form fluidly separate first and second tank volumes 12, 14. The liquid connection 18 between the at least first and second tank volumes 12, 14 is configured as open or as sealed when the liquid tank arrangement 1 is installed in a vehicle 2. The liquid connection 18 may be open and comprise a hose, as exemplified in **FIG. 2** and **FIG. 3****.**

Each of the at least first and second tank volumes 12, 14 may comprise a liquid inlet 20 for filling liquid in the first tank volume 12 and in the second tank volume 14, respectively, and a liquid outlet 22 for dispensing liquid from the first tank volume 12 and from the second tank volume 14, respectively. **FIG. 3** illustrates a combined tank volume 16. As exemplified in **FIG. 3****,** only one of the liquid inlets 20 and only one of the liquid outlets 22 are in use, and other liquid inlets 20 and liquid outlets 22 are permanently sealed when the at least first and second tank volumes 12, 14 are fluidly connected to form the single combined tank volume 16. The sealed liquid inlets 20 and liquid outlets 22 are blacked in **FIG. 3****.** The liquid inlets 20 and liquid outlets 22 may be closed and sealed during installation using sealing elements 34, such as lids, plugs or covers, to be permanently sealed. The sealing elements 34, may be permanently glued or welded to the respective liquid inlets 20 and liquid outlets 22.

**FIG. 4** shows an example of fluidly separate first and second tank volumes 12, 14. During installation, the liquid connection 18, may be closed. The exemplified hose may be removed and replaced by seals. The removed hose is illustrated by a dashed outline in **FIG. 4****.** Respective connecting openings of the at least first and second tank volumes 12, 14 may be closed using sealing elements 34, such as lids, plugs or covers, to permanently seal and separate the at least first and second tank volumes 12, 14 from each other. The sealing elements 34, may be permanently glued or welded to the respective first and second tank volumes 12, 14. In the example of FIG. 4, the first and second tank volumes 12, 14 may contain different liquids for different purposes. Each of the first and second tank volumes 12, 14 has a usable liquid inlet 20 and a liquid outlet 22.

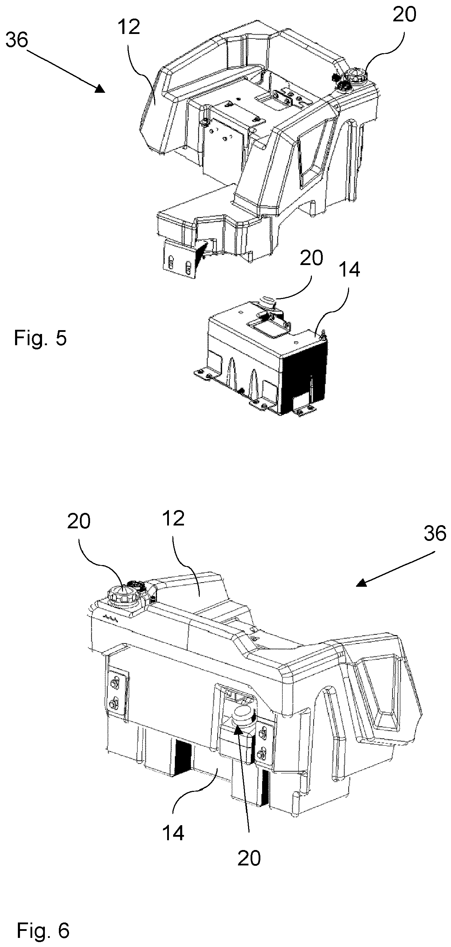

**FIG. 5** shows an exploded perspective view of an exemplary liquid tank arrangement 1 according to the first aspect of the disclosure. The at least first and second tank volumes 12, 14 may together be shaped as a seat 36 for a user of the vehicle 2 in which the tank arrangement 1 is configured to be installed. Thereby, space is saved further in that a space usually occupied by a conventional seat in the vehicle 2 may be used by the tank arrangement 1 to store a liquid, or multiple liquids. The second tank volume 14 may be shaped to be accommodated by the first tank volume 12, as shown in **FIG. 6****.**

In the illustrated example of **FIG. 5** and **FIG.6****,** a liquid inlet 20 of each tank is shown to be accessible to a user of the liquid tank arrangement 1. It may therefore be concluded that the illustrated first and second tank volumes 12, 14 are fluidly disconnected from each other. Otherwise, only one liquid inlet 20 would be accessible.

The first and second tank volumes 12, 14 may be made of plastic, which is easy to shape and to adapt to available space in vehicles 2.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A liquid tank arrangement (1) for a vehicle (2), the liquid tank arrangement (1) comprising at least a first tank volume (12) and a second tank volume (14) fluidly connectable to each other, wherein the at least first and second tank volumes (12, 14) form a single combined tank volume (16) when fluidly connected to each other and wherein the at least first and second tank volumes (12, 14) form fluidly separate first and second tank volumes (12, 14) when fluidly disconnected from each other.

2. The liquid tank arrangement (1) of claim 1, wherein the at least first and second tank volumes are fluidly connectable to each other via a liquid connection (18), and wherein the liquid connection (18) is configured to be permanently open when the at least first and second tank volumes (12, 14) form a single combined tank volume (16) and wherein the liquid connection (18) is permanently sealed when the at least first and second tank volumes (12, 14) form fluidly separate first and second tank volumes (12, 14).

3. The liquid tank arrangement (1) of any of claims 1-2, wherein each of the at least first and second tank volumes (12, 14) comprises a liquid inlet (20) for filling liquid in the first volume (12) and in the second volume (14), respectively, and a liquid outlet (22) for dispensing liquid from the first volume (12) and from the second volume (14), respectively, and wherein only one of the liquid inlets (20) and only one of the liquid outlets (22) are in use, and wherein other liquid inlets (20) and liquid outlets (22) are permanently sealed when the at least first and second tank volumes (12, 14) are fluidly connected to form the single combined tank volume (16).

4. The liquid tank arrangement (1) of any of claims 1-2, wherein the at least first and second tank volumes (12, 14) are shaped to accommodate each other in a space-saving configuration.

5. The liquid tank arrangement (1) of claim 4, wherein one of the at least first and second tank volumes (12, 14), in use, is arranged vertically above the other of the at least first and second tank volumes (12, 14)

6. The liquid tank arrangement (1) of any of claims 4-5, wherein at least two sides (12a, 12b, 14a, 14b) of each of the at least first and second tank volumes (12, 14) are adjacent two sides (12a, 12b, 14a, 14b) of at least one other of the at least first and second tank volumes (12, 14).

7. The liquid tank arrangement (1) of any of claims 4-6, wherein the at least first and second tank volumes (12, 14) are arranged in abutment with each other.

8. The liquid tank arrangement (1) of any of claims 4-7, wherein the at least first and second tank volumes (12, 14) together are shaped as a seat (36) for a user of a vehicle (2) in which the tank arrangement (1) is configured to be installed.

9. A vehicle (2) comprising the liquid tank arrangement (1) according to any of claims 1-6.

10. The vehicle (2) according to claim 8, wherein the at least first and second tank volumes (12, 14) are fluidly connected to each other or fluidly disconnected from each other.
